(19) **Europäisches Patentamt**

**European Patent Office**

**Office européen des brevets**

(11) **EP 1 264 433 B1**

(12) **EUROPEAN PATENT SPECIFICATION**

(45) Date of publication and mention
of the grant of the patent:
**08.02.2006 Bulletin 2006/06**

(51) Int Cl.:
*H04J 13/00* (2006.01)    *H04B 10/158* (2006.01)
*G02F 1/35* (2006.01)

(21) Application number: **01910040.3**

(86) International application number:
**PCT/GB2001/001041**

(22) Date of filing: **09.03.2001**

(87) International publication number:
**WO 2001/067657 (13.09.2001 Gazette 2001/37)**

(54) **OCDMA RECEIVER INCLUDING A NON-LINEAR FILTER**

OCDMA EMPFÄNGER MIT EINEM NICHTLINEAREN FILTER

RECEPTEUR AMRCO COMPRENANT UN FILTRE NON LINEAIRE

(84) Designated Contracting States:
**DE FR GB IT**

(30) Priority:  **09.03.2000   GB 0005615**

(43) Date of publication of application:
**11.12.2002   Bulletin 2002/50**

(73) Proprietor: **THE UNIVERSITY OF SOUTHAMPTON**
**Southampton S017 1BJ (GB)**

(72) Inventors:
• **RICHARDSON, David John**
**Highfield,**
**Southampton SO17 1BJ (GB)**
• **PETROPOULOS, Periklis**
**Highfield,**
**Southampton SO17 1BJ (GB)**
• **IBSEN, Morten**
**Highfield,**
**Southampton SO17 1BJ (GB)**
• **TEH, Peh Chiong**
**Highfield,**
**Southampton SO17 1BJ (GB)**
• **LEE, Ju Han**
**Highfield,**
**Southampton SO17 1BJ (GB)**

(74) Representative: **Haines, Miles John L.S.**
**D Young & Co**
**120 Holborn**
**London EC1N 2DY (GB)**

(56) References cited:
• **GEIGER H ET AL: "Demonstration of a simple CDMA transmitter and receiver using sampled fibre gratings" 24TH EUROPEAN CONFERENCE ON OPTICAL COMMUNICATION. ECOC '98 (IEEE CAT. NO.98TH8398), PROCEEDINGS OF ECOC '98 - 24TH EUROPEAN CONFERENCE ON OPTICAL COMMUNICATION, MADRID, SPAIN, 20-24 SEPT. 1998, pages 337-338 vol.1, XP002171481 1998, Madrid, Spain, Telefonica, Spain ISBN: 84-89900-14-0**
• **OLSSON B - E ET AL: "NOISE FILTERING WITH THE NONLINEAR OPTICAL LOOP MIRROR" JOURNAL OF LIGHTWAVE TECHNOLOGY,US,IEEE. NEW YORK, vol. 13, no. 2, 1 February 1995 (1995-02-01), pages 213-215, XP000511108 ISSN: 0733-8724 cited in the application**
• **DUBOVITSKY S ET AL: "TUNABLE WAVELENGTH FILTERS BASED ON NONLINEAR OPTICAL INTERACTIONS IN SEMICONDUCTOR AMPLIFIERS" JOURNAL OF LIGHTWAVE TECHNOLOGY,US,IEEE. NEW YORK, vol. 14, no. 6, 1 June 1996 (1996-06-01), pages 1020-1026, XP000598506 ISSN: 0733-8724**

**Description**

## BACKGROUND OF THE INVENTION

The invention relates to the field of optical telecommunications, more specifically, but not exclusively to optical code division multiple access (OCDMA).

The continued rapid growth in Internet traffic demands the development of optical networks of ever increasing capacity and functionality. It is clear that when developing such future networks it will be desirable, if not essential, to perform as much as possible of the processing and routing of signals directly within the optical domain. In this way many of the 'bottlenecks' currently imposed by optoelectronic conversion and electronic processing of data can be removed.

All-optical pattern generation and recognition are two such signal-processing functions that are likely to be required in future high-capacity optical networks. These functions will be needed for example for header recognition in ultra-fast OTDM packet switched networks, and for use within Optical Code Division Multiple Access (OCDMA) systems [1,2]. OCDMA is the optical analogue of the CDMA technique that has been applied with such success to the field of mobile communications. CDMA is a spread-spectrum digital transmission technique which allows multiple users of a network to share the same relatively broad transmission bandwidth through the allocation of specific mathematically defined codes which dictate how the individual users use/sample the available spectral bandwidth in order to both send and receive data. There are two main types of technique used to spectrally code and spread a data signal, these are the so-called Direct-Sequence (DS-) CDMA, and Frequency-Hopping (FH-) CDMA, however it is also possible to use hybrid approaches which seek to combine the two techniques [3]. In DS-CDMA the digital data is directly coded with pseudo-random patterns in the time-domain, and the receiver knows how to generate the same code and correlates the received signal with that code to extract the data. By contrast in FH-CDMA, the signal is rapidly switched between different frequencies within the hopping bandwidth pseudo-randomly, and the receiver knows beforehand where to find the signal at any given time. OCDMA is still in the very earliest stages of technological development however it is attractive for a number of reasons which include amongst others the capacity for high connectivity, more flexible bandwidth usage, asynchronous access and improved system security.

We recently demonstrated a number of DS-CDMA systems based upon fiber Bragg grating encoding/decoding devices [4]. These particular experiments showed the suitability of using superstructure fiber Bragg grating (SSFBG) technology for the generation, recognition and recoding of phase encoded optical code sequences containing as many as 63-chips at chip rates as high as 160 Gchip/s. Longer code sequences and higher chip rates should also be possible. A DS-CDMA system that uses sampled Fibre Bragg gratings for encoding and decoding of optical signals is described by Geiger et al in "Demonstration of a simple CDMA transmitter and receiver using sampled fibre gratings", Proceedings of ECOC '98, 20-24 September 1998, pages 337-338, ISBN 84-89900-14-0.

A SSFBG can be defined as a standard fiber grating, i.e. a grating with a rapidly varying refractive index modulation of uniform amplitude and pitch, onto which a slowly varying refractive index modulation has been applied along its length. It can be readily proven that the impulse response of a weakly reflecting SSFBG (reflectivity less than - 20%) follows precisely the same form as the slowly varying, superstructure refractive index profile [5]. We produce our SSFBGs using a continuous grating writing method which enables us to write fiber Bragg gratings on a grating plane by grating plane basis, and which thereby allows the fabrication of gratings with highly complex refractive index profiles [6]. SSFBGs can thus be designed and fabricated with a wide range of complex tailored impulse response functions with precise amplitude and phase characteristics. Such SSFBGs should find application within a variety of optical pulse processing systems [7,8], including use within both DS-OCDMA code generation and recognition devices and for which precise control of the amplitude and phase of the temporal pulse profile is essential. SSFBG technology represents an attractive means to produce compact, and potentially low-cost components for such applications relative to the more conventional technological approaches and which include: the use of planar lightwave circuits [9], arrays of discrete fiber gratings [10], bulk grating based systems incorporating spatial light modulators [11], and arrays of fiber couplers [12].

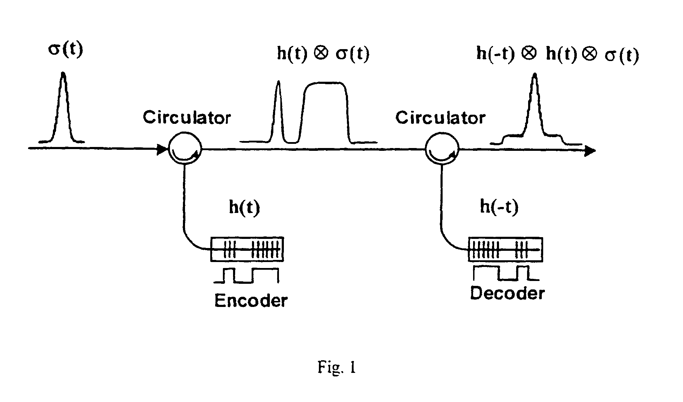

Fig. 1 shows the basic principle of pulse encoding and decoding by SSFBG's. When a short pulse enters the SSFBG encoder, the resulting reflected signal represents a coded sequence of distinct, time-spread pulses (the individual pulses that make up the code sequences are commonly known as chips). The individual chip duration, the code sequence, and code length are defined by the SSFBG impulse response, which as discussed above, is given by the SSFBG refractive index profile. The coded pulse sequence is then transmitted along an optical fiber to the decoder/receiver. The decoder operates on the principle of matched filtering, and as such is based upon purely linear optical effects. The matched filtering operation is realized in practice by reflecting the coded pulses from a grating with the spatially reversed superstructure profile of the encoder grating and which thus has the temporally inversed impulse response (phase conjugate frequency response). Consequently the pulse reflected from the decoder grating represents the cross-correlation function between the codes used within the encoder and decoder SSFBGs. In the instance that the codes are matched the reflected pulse represents the autocorrelation function of the encoded pulse sequence.

High quality code generation and recognition in the time domain can be obtained by this method [13]. Unfortunately though as one moves to longer code lengths, higher data rates and multi-user operation, undesirable phenomena can come into play that reduce the quality and contrast of the pattern recognition signature and begin to adversely affect the quality of the system performance. Such undesirable phenomena can include decoherence of the refractive index profile along the grating length due to fiber diameter inhomogeneity or errors in the writing process itself, adjacent code (intra-channel) interference, and inter-channel interference.

It has been shown [21] that gated detection can be used at the receiver to suppress side lobes caused by fiber dispersion in an OCDMA transmission system. However, by including some kind of gating device, the receiver design is made more complex and optoelectronic and electrical components are needed which is a limitation for high bit rate communications.

## SUMMARY OF THE INVENTION

According to a first aspect of the invention there is provided an optical receiver comprising:

(a) an input for receiving an encoded optical signal that has been encoded with an encoding signature;
(b) a decoder connected to receive the encoded optical signal from the input, the decoder incorporating a decoding signature complementary to the encoding signature so as to decode the encode optical signal to produce a decoded optical signal having an autocorrelation peak and a background component;
characterised in that the optical receiver further comprises
(c) a non-linear optical element connected to receive the decoded optical signal and enhance the autocorrelation peak relative to the background component by virtue of the autocorrelation peak having an intensity above a non-linear threshold of the non-linear optical element and the background component having an intensity below the non-linear threshold of the non-linear optical element, thereby to enhance the decoded optical signal, wherein the non-linear optical element is a semiconductor optical amplifier (SOA).

This approach provides a simple passive way of improving the reception quality of an optical signal that has been decoded after spread-spectrum encoded transmission. In particular, the need for optical gating circuitry [21] is completely avoided. The advocated approach not only allows intensity discrimination of the decoded autocorrelation peak relative to the background component, but also allows the pulse width of the autocorrelation peak to be reduced (compressed) back down to the pulse width of the optical signal at the transmitter before spread-spectrum encoding, or even to narrower pulse widths if desired.

Other suitable non-linear components could be used as an alternative to the SOA, for example a non-linear directional coupler, a semiconductor saturable absorber or a Kerr gate. The use of SOAs as narrow-band tunable wavelength filters for dense wavelength division multiplexed (WDM) optical fibre networks is described by Dubovitsky and Steier in "Tunable wavelength filters based on nonlinear optical interactions in semiconductor amplifiers", Journal of Lightwave Technology, Vol. 14, No. 6, June 1996, pages 1020-1026.

The decoder may comprise a refractive index modulation induced grating which may be fabricated in an optical fiber or a planar waveguide, for example.

The receiver may further comprise a dispersion compensator arranged to compensate for dispersion during transmission of the encoded optical signal.

An amplifier is preferably arranged prior to the non-linear optical element and configured to supply the decoded optical signal to the non-linear optical element within a desired power range. The amplifier is preferably an optical amplifier, thereby avoiding optoelectronic components.

The decoder is preferably arranged in reflection in combination with a circulator. It could however be arranged in transmission in alternative embodiments.

The decoder may be configured to decode a spread-spectrum or OCDMA encoded optical signal. Optical packet switched signals may also be handled.

According to a second aspect of the invention there is provided an optical transmission system comprising:

(a) an optical transmitter including an encoder for generating encoded optical signals;
(b) a transmission link for conveying the encoded optical signal from the optical transmitter; and
(c) an optical receiver according to the first aspect of the invention.

According to a third aspect of the invention there is provided a method of decoding an encoded optical signal comprising:

(a) receiving an optical signal;
(b) decoding the encoded optical signal with a decoder to generate a decoded optical signal having an autocorrelation peak and an adjacent background component; characterised in that the method further comprises

(c) supplying the decoded optical signal to a non-linear optical element such that the autocorrelation peak has an intensity above a non-linear threshold of the non-linear optical element and the background component has an intensity below the non-linear threshold, thereby to enhance the autocorrelation peak relative to the background component, wherein the non-linear optical element is a semiconductor optical amplifier (SOA).

The decoded optical signal is supplied to the non-linear optical element after amplification to ensure that the non-linear optical element performs to a desired specification.

In an illustrative example that is outside the scope of the appended claims, we demonstrate a grating-based OCDMA code generation and recognition system incorporating a nonlinear optical loop mirror (NOLM) within the receiver. It is shown that the NOLM can act as a nonlinear processing element capable of reducing both the pedestal associated with conventional matched-filtering, and the width of the associated code-recognition pulse. The pedestal rejection allows for an improved code recognition signal to noise ratio relative to simple matched filtering alone and reduced intra- and inter-channel interference noise due to code overlap. The system benefits of using the NOLM are experimentally demonstrated under both single and multi user operation within a variety of both 7- and 63-chip, 160 Gchip/s code generation, recognition and transmission experiments based on the use of bipolar SSFBG coding:decoding pairs. Incorporation of the NOLM is shown to allow error-free, penalty free operation at data rates as high as 2.5Gbit/s under single user operation, and to provide error-free performance with reduced power penalty in two-user experiments. The narrowed pulse recognition signature offers major advantages in terms of the further all-optical processing of decoded signals, such as code regeneration and recoding.

The receiver, system and/or method can also include one or more of the following features:

1. Incorporation of both dispersion-compensating and encoding or decoding gratings into a single superstructure grating.

2. Addition of multiple codes within a single grating - for example two codes at different central wavelengths.

3. Further extension of either the grating length or reduction in chip size to increase the code length to codes of greater than 5000 chips, or more, allowing rapid increases in simultaneous users.

4. More complex superstructure profiles including amplitude and phase features to shape controllably the individual chip shapes.

5. Incorporation of simultaneous additional, multiple functionality with a single grating (decoding or coding) structures e.g. loss compensation and dispersion compensation ($2^{nd}$ and $3^{rd}$ order).

6. The apparatus may be reconfigured such that the superstructure grating as above is used in transmission mode rather than reflective mode.

7. To use higher reflectivity versions of the decoder/coder gratings designed using more advanced design algorithms (e.g. inverse scattering techniques) other than by the Fourier approach.

8. To use cascades of one or more code/decode gratings.

9. Use advanced codes such as those developed by the mobile-communications community for optimized correlation function definition e.g. M-sequences, Gold sequences or Kasami codes.

10. Use a combination of a decoder grating and nonlinear element such as a semiconductor optical amplifier or fiber-based nonlinear switch to enhance the correlation contrast and effect further enhanced processing functions such as optical routing, header removal and rewrite, data packet loading.

11. Use parallel arrays of coder-decoder gratings to enhance multi-user operation.

12. Use of coder/decoder approach to allow reduction of nonlinear optical effects by extending the bit duration in the time domain, thereby reducing optical intensities.

13. Use superstructure gratings to shape optical pulses (that may be of non-optimal form) for a given transmission technique or optical processing function to a more-desirable functional form for onward transmission or processing, e.g. chirped pulse to transform limited pulse conversion, soliton to super-Gaussian pulses, soliton to dispersion solitons, Gaussian pulses to square pulses.

14. Extend the grating bandwidths of code-decode grating to up to 200nm or further.

15. Extend technique to other wavelength regimes in the range 700nm to 2000nm or further.

16. Extend the superstructure decoding technique to correlate (provide matched filtering) directly with the output from a modulated optical source. For example the source can be a directly modulated gain-switch diode, and externally modulated DFB laser, a mode-locked fiber ring laser with external modulation.

17. Addition of wavelength division multiplexers and demultiplexers such as arrayed waveguide gratings to facilitate multi-wavelength operation, with one or more wavelengths being operated under the code-division multiplexing technique described previously.

18. Operation of the system with synchronous transmitters and receivers.

19. Operation of the system with asynchronous transmitters and receivers.

20. Operation of the system with a combination of synchronous and asynchronous transmitters and receivers.
21. Use of non-SSFBG code/decode components, for example directly coded signals where coding is impressed with an electric signal applied to electrodes of an modulator or an optical source drive current.

Further aspects of this invention include code division multiplexing (CDM) system architectures, a method of using CDM systems architectures, a CDM architecture for optical communications, or a combined CDM and WDM system architecture for optical communications.

By CDM we mean not only code-division multiplexing but also include ultrafast packet-switched, or other OTDM networks or transmissions systems.

## BRIEF DESCRIPTION OF THE DRAWINGS

For a better understanding of the invention and to show how the same may be carried into effect reference is now made by way of example to the accompanying drawings.

Figure 1.    Basic principle of pulse encoding and decoding by SSFBGs.

Figure 2.    Configuration of a 7-chip time spread DS-OCDMA system incorporating a NOLM. The saturated output power from EDFA3 was 15dBm. The length of DSF in the NOLM was 6.6km and the dispersion of the DSF was 1.18ps/nm/km.

Figure 3.    Theoretical calculation showing the predicted impact of the NOLM on both the autocorrelation signal reshaping and pedestal rejection as a function of input pulse power; (a) actual pulse shape evolution as a function of increasing input pulse peak power, (b) same data plotted in a log scale.

Figure 4.    (a) FWHM of the central autocorrelation feature as a function of input power, (b) corresponding value of the signal contrast defined as the ratio between the peak power of the output pulse to that of the first pedestal lobe, (c) contrast ratio in terms of the measured SHG autocorrelation of the decoded pulse form.

Figure 5.    Predicted and measured reflectivity of the NOLM as a function of input peak power.

Figure 6.    Experimental and theoretical SHG autocorrelation functions at a peak power of 1.2W both (a) before and (b) after the NOLM.

Figure 7.    (a) Experimental setup for the 63-chip. 160 Gchip/s system experiments,
(b) two 63-chip bipolar Gold codes and the corresponding spectral profiles of the encoder SSFBGs that were fabricated.

Figure 8.    Theoretically predicted, and experimentally observed, response of (a) gratings C1 and (b) their corresponding conjugates C1* after excitation with 2.5ps pulses. (solid lines: experimental measurements, dashed lines: theoretical plots). The detection bandwidth of the experimental measurement (~20GHz) was not taken into consideration for the theoretical calculation.

Figure 9.    The SHG autocorrelations of the central correlation spikes of the decoded pulseforms, (a) prior to the NOLM and (b) directly after the decoder grating for bit-rates of both 1.25 and 2.5 Gbit/s.

Figure 10.    Eye diagrams of (a) the input 2.5ps pulses, (b) the pulses after matched filtering and (c) the matched filtered pulses after nonlinear switching by the NOLM for the data rates of 1.25GHz and 2.5GHz, each. (100ps/div)

Figure 11.    Measured BER versus received optical power for single-user operation at 1.25Gbit/s and 2.5Gbit/s.

Figure 12.    For single-channel operation at 10Gbit/s, (a) eye diagrams (50ps/div) and (b) BER versus received optical power.

Figure 13.    Eye diagrams for 2-channel operation at 2.5Gbit/s. (100ps/div)

Figure 14.    Measured BER versus received optical power for 2-channel operation at 1.25Gbit/s and 2.5Gbit/s.

Figure 15.    Optical packet switching node for a packet-switched optical communication system.

## DETAILED DESCRIPTION

### I. Introduction

In the following we report both theoretical and experimental results concerning the use of a self-switchine, nonlinear optical loop mirror (NOLM) within a time-spreading DS-OCDMA system to act as a fast saturable absorber with which to improve the quality of the code recognition signature. This is an illustrative example outside the scope of the appended claims. NOLMs have already been adopted for various other optical processing applications, these include amongst others; pulse laser compression [14], extinction ratio improvement of optical time domain multiplexing (OTDM) systems [15], all-optical channel demultiplexing [16] and filtering of amplified spontaneous emission (ASE) noise [17]. We show that a suitably designed NOLM can significantly improve the contrast of a degraded pattern recognition signature due to imperfect matching of SSFBG parameters, and that it can reduce both intra-channel and inter-channel interference noise.

The remainder of this description is organized as follows:

In Section II we present the results of a preliminary theoretical study into the pulse-shaping and signal-contrast enhancement effects that can be obtained by incorporating a suitably designed NOLM into a SSFBG based DS-OCDMA system. Calculations are presented for a specific 7-chip, bipolar 160 Gchip/s system based on M-sequence codes, and the results are then compared with experimental data.

In section III we present the results of detailed system experiments using 63-chip, 160 Gchip/s bipolar coding and decoding SSFBGs in which the noise reduction benefits of using the NOLM within the decoder are more apparent. The performance benefits achieved are then quantified from a system perspective. Both single channel and multi-channel operation are investigated and the cancellation of both intra-channel, and inter-channel interference noise are successfully demonstrated.

In Section IV, we draw conclusions regarding our results and discuss further extensions and applications of the technology.

In Section V, we describe an optical packet switching receiver incorporating a non-linear element for signal processing.

### II. Theoretical and experimental analysis on improved performance of a 7-chip time spread DS-OCDMA system using a NOLM

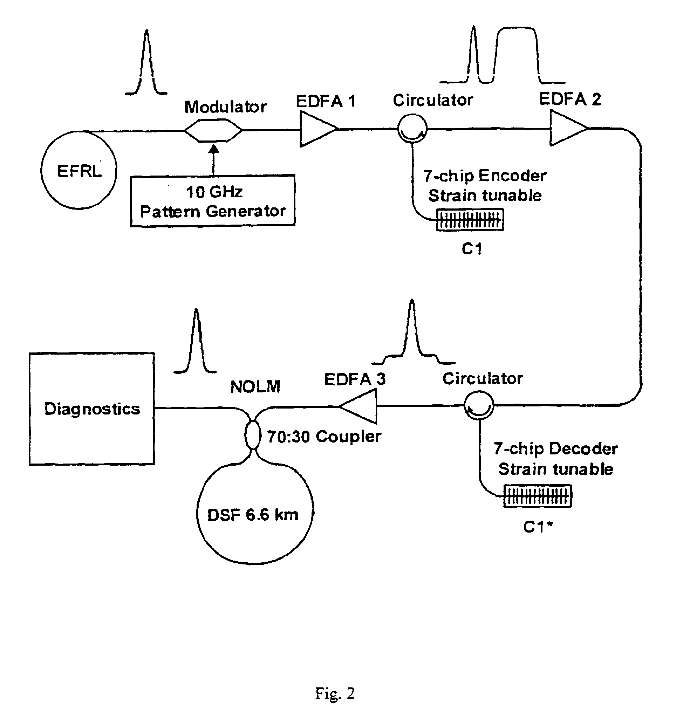

The configuration for the 7-chip time-spread DS-OCDMA system that we used to first validate the nonlinear, code recognition signature enhancement concept described above is shown in Fig. 2. The system comprised: a 2.5ps, 10GHz regeneratively mode locked erbium fiber ring laser (EFRL) with an external 10GHz 'pulse selector': a 7-chip coding SSFBG; a matched 7-chip decoder SSFBG; various low-noise amplifiers to compensate for the system losses; a power amplifier to boost the power of the decoded signal; and a NOLM for nonlinear processing of the matched-filtered signal. Short pulses from the laser were launched onto the coding SSFBG resulting in the generation of a code sequence corresponding to the impulse response of the grating. In this instance the particular code was bipolar with the required phase-shifts distributed within the grating in accordance with the 7-chip M-sequence code '0100111'. The chip length of the gratings used in our experiments was 6.4ps, corresponding to a chip rate of 160 Gchip/s. The coded pulse sequence had a total duration of ~45ps. The coded pulses were then launched onto the decode grating. The temporal form of the pulses reflected from the decoder grating thus represented the cross-correlation function between the incoming encoded sequence and the decoder grating's impulse response function. Assuming that the encoder:decoder gratings are well matched then our specific choice of a 7-chip M-sequence ensures a good pattern recognition signature which has the form of a short, chip-length long autocorrelation spike on a relatively low-level broad pedestal. The pedestal has a total duration of twice the code length (i.e. 90ps). We quantified the performance of the particular gratings used in these experiments in an earlier work which showed that the precision of our grating writing was such that we could indeed obtain excellent pattern recognition signatures using the matched filtering approach [4]. In the current experiments we amplified the decoded pulses to a high power and then passed the amplified pulses through the NOLM in order to selectively pass the correlation spike and filter out the low level pedestal prior to detection. This nonlinear processing serves to further improve the signal to noise ratio of the pattern recognition signature and to reshape the correlation spike.

In order to validate theoretically our system concept, and to establish our optimum NOLM design, we first modeled the above system as a function of the key parameters of the NOLM (e.g. coupling ratio, dispersion and length) and the peak power of the decoded pulse incident to the NOLM. We assumed the SSFBGs to be perfectly matched and to behave as idealized 7-chip M-sequence coders and decoders. Pulse propagation within the NOLM was modeled using the nonlinear Schrödinger equation with group velocity dispersion, self-phase modulation, intrapulse Raman scattering, and self-steepening, and shock formation at a pulse edge [18] as described by Eq. (1).

$$\frac{\partial A}{\partial z} + \beta_1 \frac{\partial A}{\partial t} + \frac{i}{2} \beta_2 \frac{\partial^2 A}{\partial t^2} - \frac{1}{6} \beta_3 \frac{\partial^3 A}{\partial t^3} + \frac{\alpha}{2} A = i\gamma |A|^2 A - \frac{\gamma}{\omega_o} \frac{\partial}{\partial t}(|A|^2 A) - i\gamma T_R A \frac{\partial |A|^2}{\partial t} --$$

$$(1)$$

where pulse amplitude A is normalized such that $|A|^2$ represents the optical field strength within the fiber. $\beta_1$ is the group delay, $\beta_2$ is the first order group velocity dispersion (GVD), and $\beta_3$ is the second order GVD. a represents the absorption coefficient of optical power in the fiber and corresponds to 0.25dB/km, $\omega_0$ is the signal frequency, and $\gamma = \frac{n_2 \omega_o}{cA_{eff}}$ is the nonlinearity coefficient where $n_2 = 2.6 \times 10^{-20}$ $m^2/W$ and $A_{eff} = 50\mu m^2$ is the effective area of the fiber. $T_R$=2fs has its origin in the delayed Raman response and represents the first-order Raman gain effects. (Note that in fact neither Raman scattering, self-steepening, nor third-order dispersion play a significant role in the evolution of pulses of order the chip length over the ~6km propagation lengths considered herein.)

We solved the above equation using the symmetrized split step Fourier method [18]. We modeled a NOLM constructed from a 70:30 coupler and a length of dispersion shifted fiber (DSF). DSF was chosen in preference to standard single mode fiber (SMF) in order to reduce the power required to generate the necessary SPM/soliton effects due to both its higher nonlinearity and smaller dispersion relative to SMF. The values of the dispersion parameter (D), dispersion slope ($\frac{dD}{d\lambda}$), and nonlinearity coefficient ($\gamma$) assumed within our calculations were 1.18ps/nm/km, 0.07 ps/nm$^2$/km and 1.55 W$^{-1}$km$^{-1}$ respectively at the system-operating wavelength of 1558nm and corresponded to those of a fiber that was available within our laboratories. The fiber length was 6.6km.

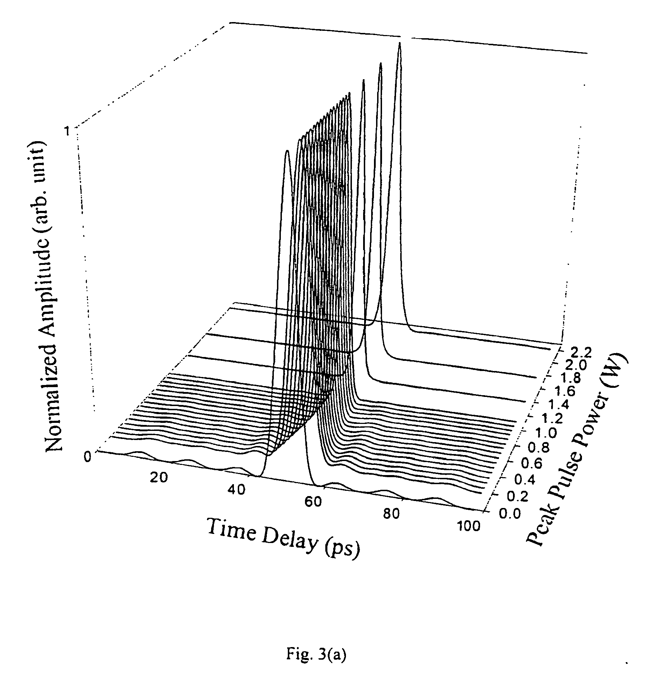

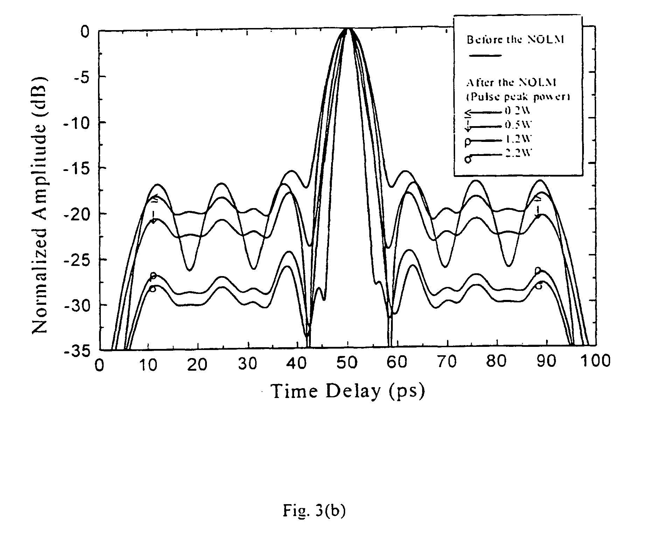

In Fig. 3 we present the results of our theoretical calculation which show the predicted impact of the NOLM on both the autocorrelation signal reshaping and pedestal rejection as a function of input pulse power. In Fig. 3(a) we plot the pulse shape evolution as a function of increasing input pulse peak power. Fig. 3(b) is a log scale plot of the same data. The pulse shape of the simple matched filtered decoded signal for the particular 7-chip bipolar pulse sequence used in our experiments is given by the '0 W' pulse form in Fig. 3(a). (Note that the individual pulse shape at each power is normalized with respect to the peak pulse amplitude). It can be seen that as the decoded signal power is increased the relative height of the ripple features associated with the pedestal decreases and the central autocorrelation feature narrows significantly.

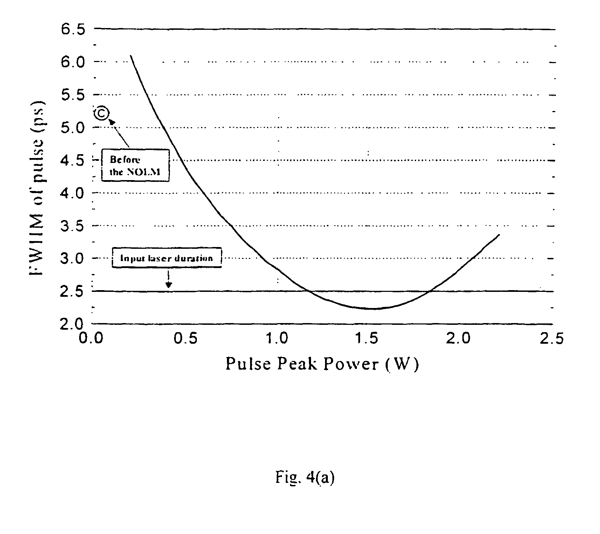

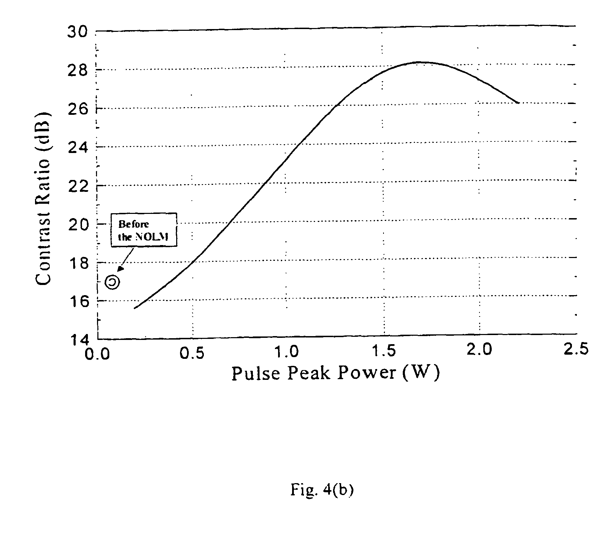

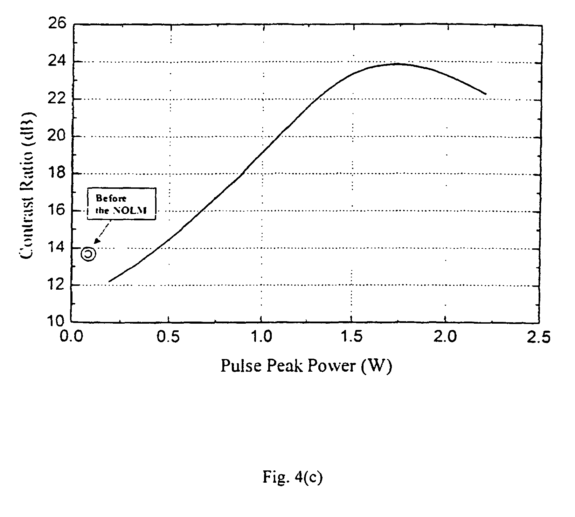

These features are summarized more fully in Figs. 4(a), (b) and (c). In Fig. 4(a) we plot the half width of the central autocorrelation feature as a function of input power. It is seen that optimum compression with compression factors approaching '3' are obtained at a pulse peak power of ~1.5W. Note that for a peak power of 1.2W the pulse duration is 2.5ps, essentially the same as that of the input laser pulses. In Fig. 4(b) we plot the corresponding value of the signal contrast which we define as the ratio between the peak power of the output pulse to that of the first pedestal lobe. After simple matched filtering alone, (i.e. before the NOLM), this ratio is ~17dB. However, this can be increased by as much as 10 dB at a peak power of 1.6W and represents the optimum contrast enhancement in this instance. An 8-9 dB contrast enhancement is achieved at a peak power of 1.2 W. In Fig. 4(c) we quantify the improvement in contrast ratio in terms of the measured SHG autocorrelation of the decoded pulse form, since in practice it is this that we measured directly in our preliminary experiments. A factor of ~3 reduction in pulse width and a peak contrast ratio enhancement factor of order 10dB is again predicted. The pulse width contraction and nonlinear filtering result from high order soliton effects within the NOLM [19]. These calculations, and others over a broader parameter space than described so far, show that for optimal pulse compression we require a ~70:30 coupling ratio, a soliton order of N = 3 within the 70% coupling direction within the loop, and the loop length to be of order the soliton period. (The relevant pulse duration for calculating the soliton period and order in the above is given by the half width of the correlation spike incident to the loop).

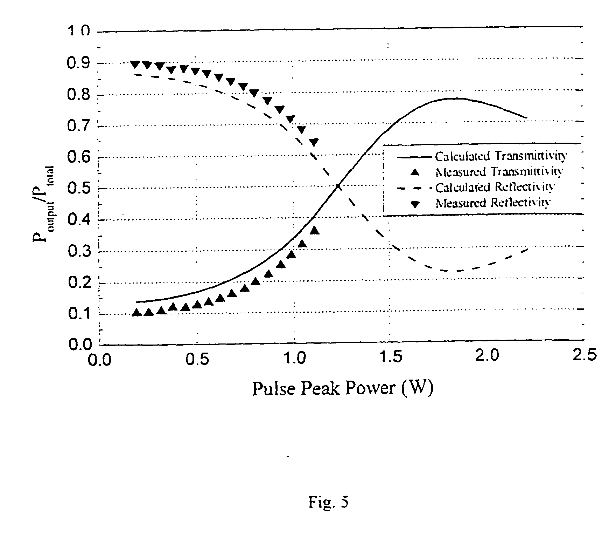

In Fig. 5 we plot the predicted reflectivity of the NOLM as a function of input peak power. The NOLM is predicted to transmit ~12% of the incident decoded pulse power at low intensities, with this percentage increasing to ~78% at a pulse power of ~1.8W. The reflectivity at ~1.5-1.6W incident power, the optimum power in terms of minimum pulse duration/contrast enhancement, is ~70%. In Fig. 5 we also plot the experimentally determined reflectivity as a function of incident power. The amplifier used in this particular experiment limited our maximum achievable peak power to 1.2W, which although slightly less than optimum, still allowed for significant switching, pulse shaping and contrast enhancement.

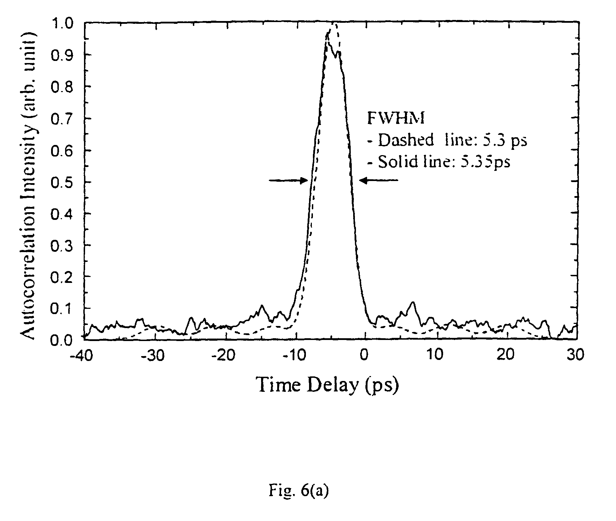

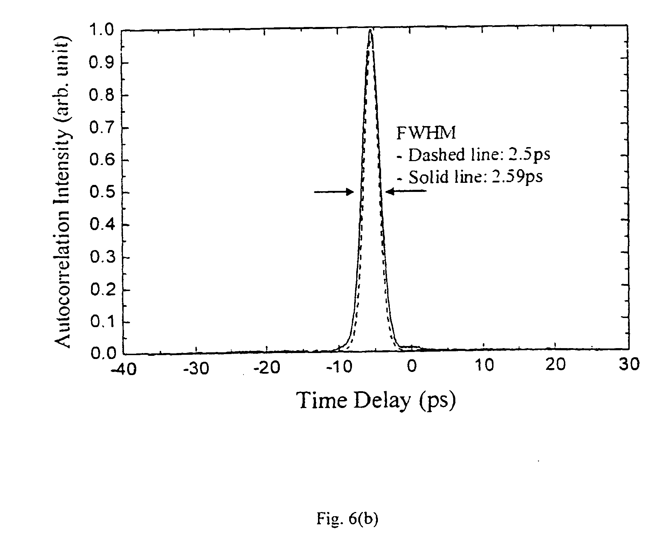

The experimentally observed nonlinear increase in NOLM transmission closely follows the predicted theoretical form, and approaches 40% at the 1.2W level. In Fig. 6 we plot the experimental and theoretical SHG autocorrelation functions at a peak power of 1.2W both before and after the NOLM. Excellent agreement between theory and experiment is observed in both cases in terms of both pedestal suppression, and pulse narrowing. The final deconvolved pulse duration after the NOLM is ~2.6ps, essentially the same as the input pulseform and exactly as predicted in Fig. 4(a).

Our preliminary experiments thus validate our theoretical predictions of pattern recognition signature clean up, and narrowing. As it happens the autocorrelation properties of this particular M-sequence, and the quality of these 7-chip bipolar gratings is so good, that error-free, penalty free operation can readily be achieved with matched filtering alone. The benefits of the NOLM as a pulse-cleaning element only really become evident from a system perspective as either longer code words are used, or when there are multiple users of the system. The use of longer code words dictates the use of longer coding/decoding gratings and which can lead to a degradation of decode signal quality as a result of the difficulty in maintaining coherence of the grating structure over the longer physical length of the grating during fabrication. Moreover, the use of longer codes means that interference noise due to temporal overlap of adjacent coded data bits occurs once the length of the decode signal (which is two times the code length) becomes longer than the reciprocal of the data rate. The presence of this interference noise can significantly impact the system performance even under single user operation of the system. Similar interference noise is also generated once there are simultaneous users of the system, transmitting either synchronously or asynchronously over the same fiber. In order to demonstrate these features we thus performed detailed system measurements on an OCDMA system similar to that described previously for 7-chip codes, only this time with 63-chip code sequence bipolar SSFBGs. These experiments are described in detail within the next section. Note that the use of longer code words is desirable in real OCDMA systems since they support the use of a greater number of simultaneous users. In the case of 7-chip codes there are just two bipolar M-sequence codes which offers little scope for real system applications. In the case of 63 chip codes based on Gold sequences as used in our experiments there are 65 'orthogonal' bipolar code combinations [20], allowing the support of up to 65 simultaneous users.

## III. Code recognition performance improvement of a 63-chip time spread grating based OCDMA system using a NOLM

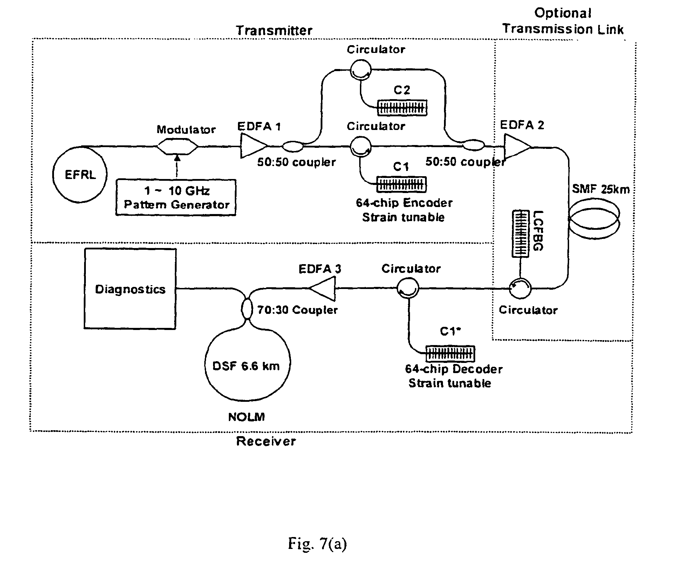

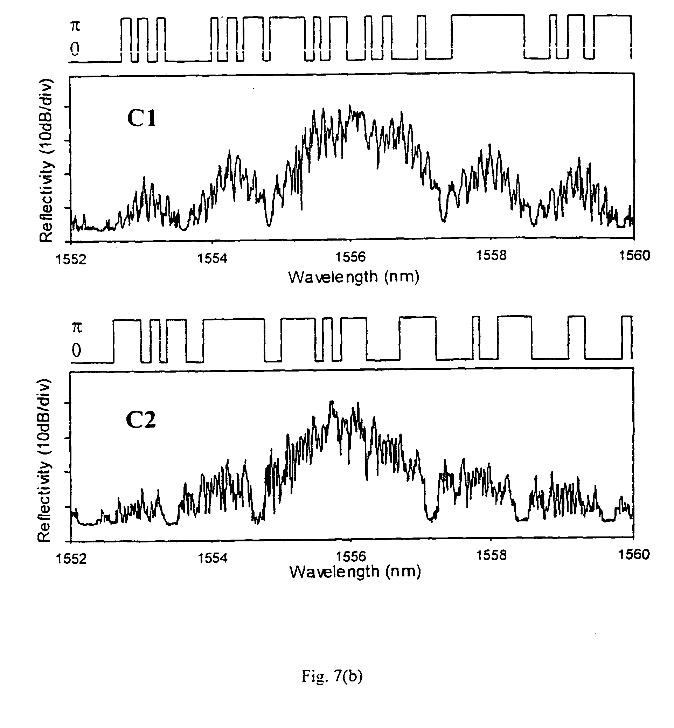

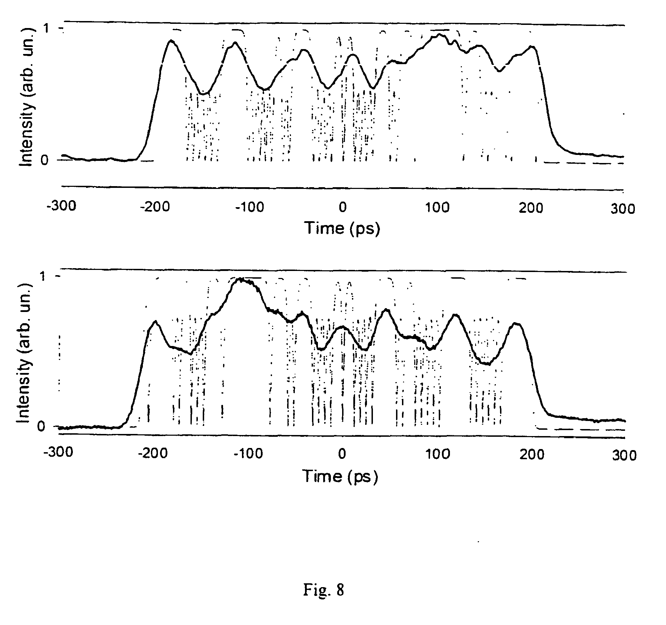

Our experimental setup for the 63 chip, 160 Gchip/s system experiments is shown in Fig. 7(a) and is similar in principle to the 7-chip set-up. In this instance the 2.5ps pulse at 10 GHz were first gated down to a lower repetition frequency, and encoded with pseudorandom data at either 1.25, or 2.5 Gbit/s. The data pulses were then split using a 3dB coupler and fed onto two separate encoder gratings, denoted C 1 and C2 respectively, before being recombined into a single fiber using a second 3dB coupler. The individual encoding SSFBG's contain phase-coding information within their refractive index profiles as defined by two 'orthogonal', 63-chip bipolar Gold codes. Once the data pulses are reflected from gratings C1 and C2 they generate two distinct data streams encoded with either one of these two distinct codes. In Fig. 7(b) we plot both the distribution of the phase changes along the gratings as defined by the two Gold sequences selected, and their corresponding spectral responses. The spiky reflectivity spectrum observed results from the multiple phase jumps within the spectrum and is as theoretically expected. The chip duration for these gratings is 6.4ps, and the chip rate 160 Gchip/s. The coded data bits have a total duration of -400ps as illustrated in Fig. 8(a) and 8(b) in which we plot both the theoretically predicted, and experimentally observed, response of gratings C1 and their corresponding conjugates C1* after excitation with 2.5ps pulses. Although the response time of the detection system used to measure these pulses was insufficient to precisely resolve the individual chips, a clear correlation between theory and the experimental data is observed, confirming the high quality of the gratings.

The coded data stream was then either fed directly to decode grating C1*, or else transmitted over 25km of standard single mode fiber whose dispersion was compensated over a 5nm bandwidth using a suitably linearly chirped fiber Bragg grating and then fed to grating C1*. Grating C1* was designed to provide a matched filter response to grating C1. The decoded output from grating C1* was then either detected directly, or amplified in EDFA3 before being passed through the NOLM prior to detection. The NOLM used in the 63-chip experiments was the same NOLM used in the previously described 7-chip experiments. The pulse shaping properties of the individual gratings, and of the gratings when used in conjunction with the NOLM, were characterized in the temporal domain using a fast pin diode and sampling oscilloscope of combined -20GHz bandwidth, and a SHG autocorrelator (<100fs resolution). The system error rate performance was measured using a BER test set with up to 10 Gbit/s measurement capability. Note that we ensured that there was a significant difference in passage time through the system for each of the individually coded data streams so as to remove any direct correlation between the data arriving at the receiver from the two channels. Moreover the relative passage time of the two channels could be fine-tuned to allow anywhere between zero and full temporal overlap of the coded data bits at the receiver.

**Single channel operation**

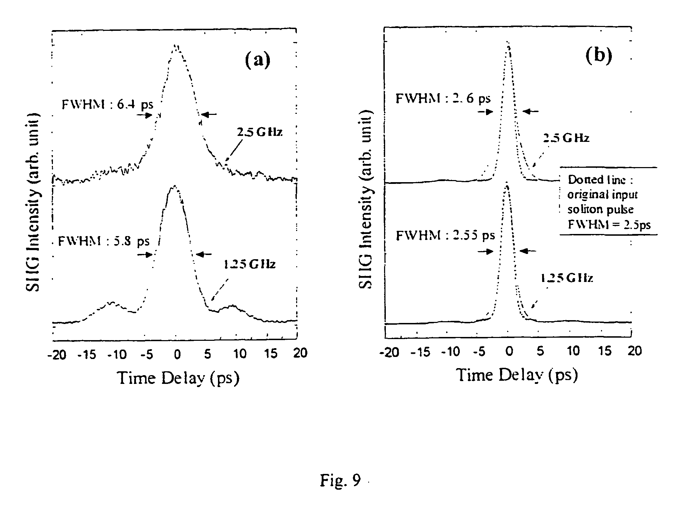

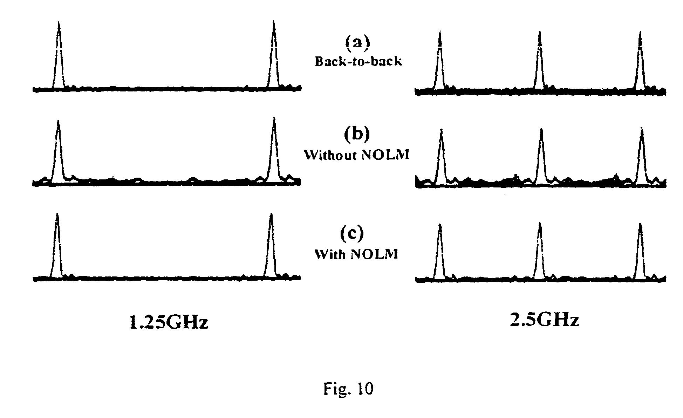

Disconnecting the fibers connected to grating C2 in Fig. 7(a) allowed us to make single user experiments using gratings C 1 and C1*. We performed encoding:decoding and associated transmission experiments at data rates of both 1.25 and 2.5 Gbit/s. In Fig. 9(a) we show the SHG autocorrelations of the central correlation spikes of the decoded pulseforms prior to the NOLM and directly after the decoder grating for bit-rates of both 1.25 and 2.5 Gbit/s. This particular data was taken with no intermediate transmission of the coded data bits. The decoded pulseforms have a deconvolved temporal half-width of 6.4ps at 2.5Gbit/s, and 5.8ps at 125Gbit/s and exhibit an appreciable pedestal component which extends +/- 400ps from the central correlation spike as can be seen in the eye diagrams shown in Fig. 10(b).

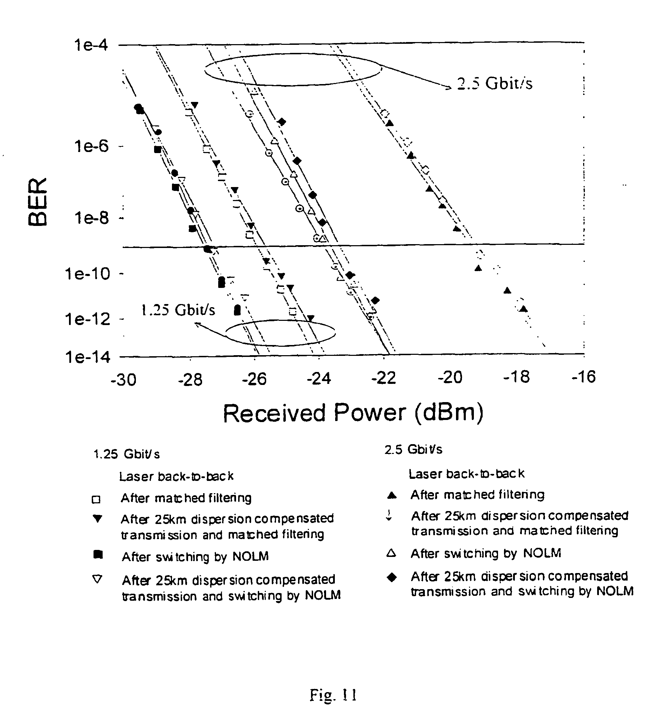

Whilst the pattern recognition signature obtained from simple matched filtering is very good, thereby confirming the quality of our coding:decoding gratings, the presence of the pedestal component can still have a significant impact on the pattern recognition signal to noise ratio. This is particularly true at data rates above 1.25 Gbit/s for which the 800ps long correlation pulses arising from individual data bits can have significant overlap in the pulse tails with decoded bits originating from neighboring bit slots. This overlap can result in significant amplitude noise associated with coherent interference between pedestals arising from adjacent/neighboring '1' data bits. This increased noise level is apparent within Fig. 10(b) where we present the eye diagrams observed for data rates of 1.25 Gbit/s (no pedestal overlap), and at 2.5 Gbit/s (pedestal contribution from the two adjacent data slots). To quantify the system impact of this noise we made detailed BER measurements on the matched filtered pulse forms shown in Fig. 9(a) and 10(b) at data rates of both 1.25 and 2.5 Gbit/s. The results are summarized in Fig. 11. These measurements showed that high quality error-free performance could be obtained at both data rates albeit with a power penalty relative to back-to-back measurements. At a data rate of 1.25 Gbit/s this power-penalty was ~1.5dB. The power-penalty increased to 4.5 dB at 2.5 Gbit/s due to the intra-channel interference noise arising from decode signal overlap as previously discussed. Note that at both data rates there was no significant additional power penalty associated with transmitting the coded bits over the 25km dispersion-compensated transmission line.

In order to reduce the power penalties observed at both 1.25 and 2.5 Gbit/s we amplified the decoded code-correlation pulse forms and fed them into the input of the NOLM. The resulting nonlinearly switched pulseforms were then characterized as previously, and BER measurements performed. The improved pattern recognition contrast is clearly evident on comparing Figs. 9(a) and (b), and Figs. 10(b) and (c). The low-level pedestal obtained with simple matched filtering is almost entirely eliminated by passage through the nonlinear loop mirror. From Fig.9 it is also seen that the shape and duration of the output pulses were restored to values close to the original input laser pulses. The benefits of the pedestal rejection from a system perspective are highlighted in Fig.11. The previously observed power penalties associated with the matched filtering are entirely eliminated. This is true even in the presence of considerable autocorrelation tail overlap at the bit-rate of 2.5 Gbit/s. Note again that for both data rates there was no power penalty associated with transmitting the coded bits over the 25km dispersion-compensated transmission line.

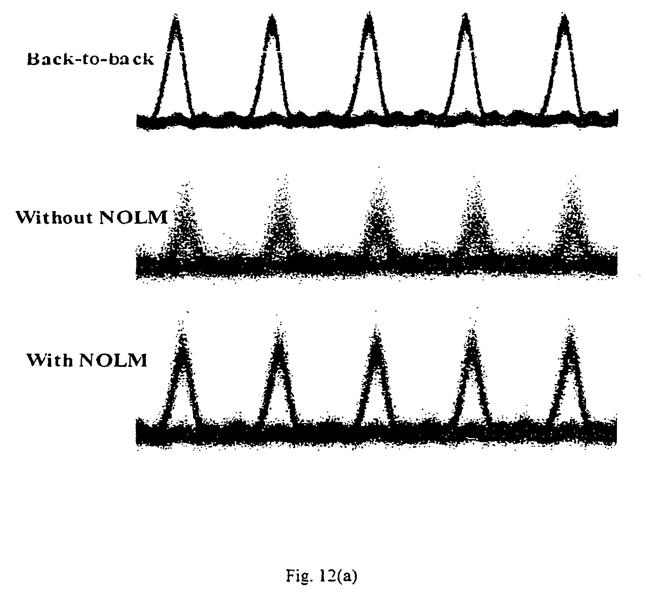

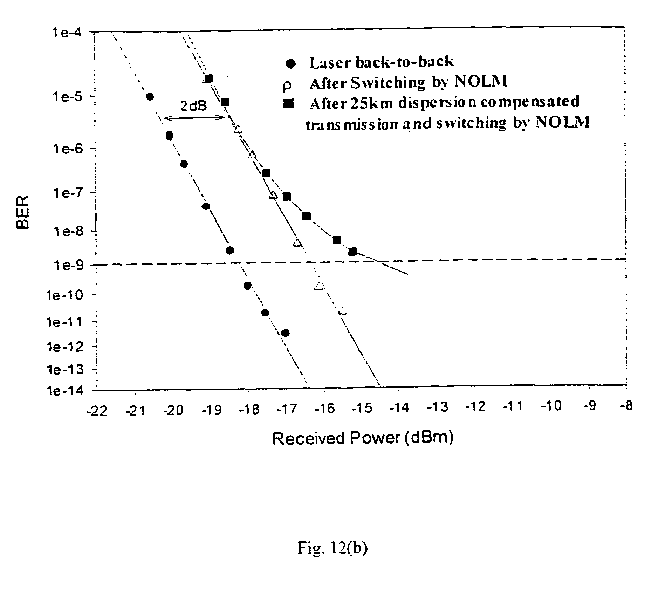

These results are significant from a single-channel data rate perspective since they show that use of a NOLM to filter intra-channel coherence noise can allow for higher data rates than possible with simple matched filtering alone. To investigate this aspect further we performed experiments at a bit-rate of 10Gbit/s. At this data rate a given bit-slot receives contributions from as many as 16 neighboring data bits, resulting in considerable interference noise. The eye diagrams obtained with and without the use of the NOLM are shown in Fig. 12(a) and highlight the significant performance improvements that can be obtained by nonlinear processing of the signal. After simple matched filtering alone at 10 Gbit/s the eye is completely closed, however after nonlinear processing a clear, open eye is restored. The system performance benefits were again quantified by BER measurements as shown in Fig. 12(b). Without the NOLM it was impossible to measure a meaningful error rate, however with the NOLM error-free performance was obtained albeit with a power penalty of ~2dB. Interestingly though in this instance we observed an error floor at the $10^{-9}$ BER level after transmission through the dispersion compensated transmission line. Whilst we have yet to fully establish the cause of this error floor we do not consider it to be fundamental to the technique itself. We believe it to be more likely associated with the additional loss of the transmission line (~10dB) and the specifics of the noise characteristics of the high-power (20dBm) $Er^{3+}/Yb^{3+}$ amplifier used for this particular experiment.

**Multi-user operation (2-channel)**

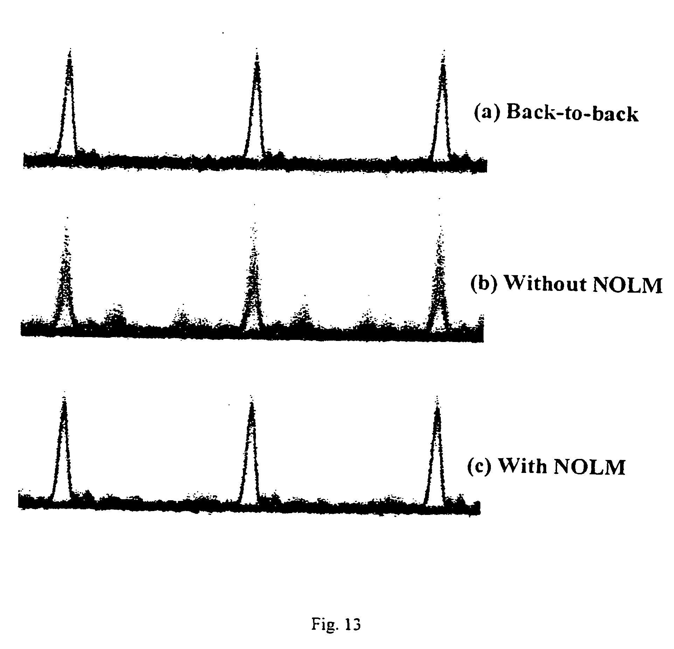

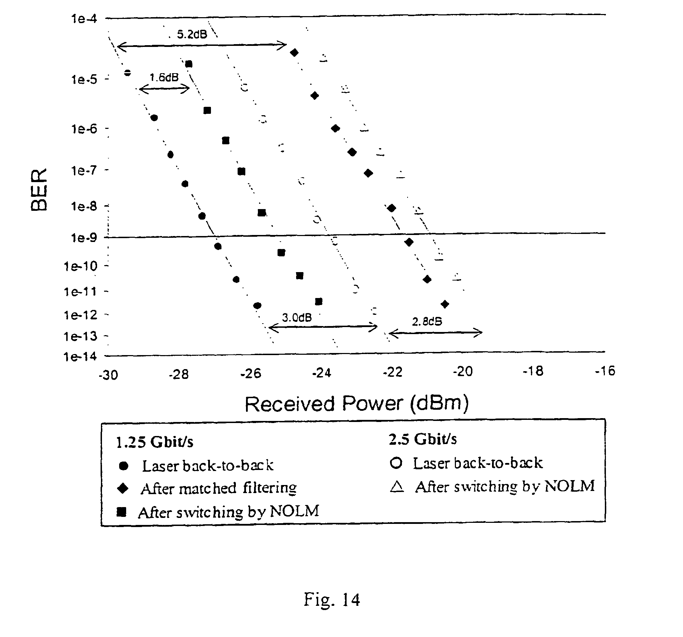

We next reconnected grating C2 and reconfigured the set up for multi-user operation. We performed system tests at the data repetition rates of 1.25Gbit/s and 2.5Gbit/s. The pulses in each channel were set to fully overlap temporally at the detector so as to maximize the impact of interchannel interference. As can be seen comparing the eye diagrams in Fig.13 (a) and (b) the temporal overlap of the two orthogonal codes results in severe interference noise at the receiver without the NOLM in place. However, as can be seen in Fig.13 (c) the quality of the eye opening is again drastically improved by nonlinear filtering of the matched filtered signal, resulting in a substantial improvement in the BER performance. The measured BER plots are summarized in Fig. 14. For a data rate of 1.25 Gbit/s error-free operation with a 3.6dB power penalty reduction relative to simple matched filtering alone is obtained through the use of the NOLM. The residual power penalty of ~1.5dB is comparable to that achieved previously for single channel operation without the NOLM. We believe the penalty in the two channel experiments to be due primarily to the contribution to the received average power made by imperfect suppression of the second ("orthogonal') channel. The benefits of using the NOLM at the higher data rate of 2.5 Gbit/s are even more manifest. In this instance it was not possible to get error free operation without the use of the NOLM. The power penalty relative to the back to back in this instance was 2.8dB, and which again was similar to that previously obtained for conventional single channel operation at this data rate. Note that as previously discussed at a data rate of 2.5 Gbit/s the individual pattern recognition signatures overlap providing an additional element of intrachannel interference noise, and hence the slightly increased power penalty relative to the 1.25 Gbit/s case in which no such overlap occurs.

## IV. Summary of NOLM OCDMA Examples

We have both numerically and experimentally demonstrated the benefits to be obtained from incorporating a nonlinear switch (in our case a NOLM) within SSFBG based OCDMA and associated all-optical processing and code recognition schemes. Error-free, penalty-free operation of a 63-chip, 160 Gchip/s OCDMA transmitter/receiver is reliably obtained through the addition of a simple nonlinear optical switch. In our experiments we used a fiber based NOLM however, semiconductor based nonlinear devices should offer similar system benefits. The improved performance that we have observed at the repetition rate of 10Gbit/s as well as both at 2.5Gbit/s and 1.25Gbit/s, offers the possibility of higher capacity data delivery than previously considered viable for coherent, direct-sequence OCDMA systems. Moreover the fact that we have achieved error-free and penalty-free operation in two channel multiplexing experiments implies that the approach should give equivalent system benefits when used in OCDMA systems operating under multi-user operation. We consider the above experiments to represent just one example of the sorts of optical processing function that will be enabled by the combination of SSFBG technology and nonlinear optical devices.

## V. Optical Packet Switching Example

Although the above-described examples have focused on the use of SSFBG technology and OCDMA applications, it is to be appreciated that the technology should also find use in a whole range of other network and transport applications in which optical pattern/code generation and recognition are required. The technology is particularly relevant to packet-switched network applications in which individual 'packets' of data are generally preceded by an optical header that defines the key routing information associated with the data payload. SSFBGs can be used to both generate and recognize these packet headers. Packet based systems can be designed to run under a variety of protocols and formats including both Internet Protocol (IP), and Asynchronous Transfer Mode (ATM) protocol. The technology is also capable of supporting an admixture of protocols on one network. Moreover, due to the inherent wavelength selectivity of gratings, the technology will allow significant WDM and DWDM multiplexing of channels.

Once generated, a header recognition signature can be used to effect onward processing, e.g. routing, of the optical data.

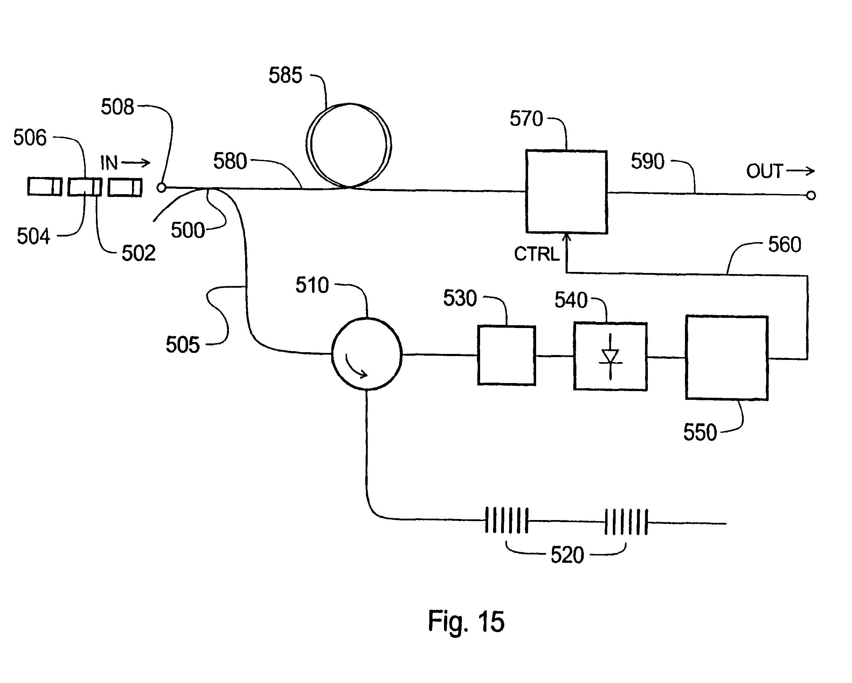

Figure 15 shows as one example an optical switching node for IP data for use in a packet switched network. An incoming data stream made up of a series of packets 506 is received at an input 508 of the routing node. Each packet 506 comprises a header 502, that defines the code address, and a subsequent data payload 504, separated by a short (guard-) time from the header address. The signal enters the routing node where it is split into two by a splitter 500, for example a 3dB fiber coupler.

In one path 580 the signal proceeds through an optical delay line 585 to an input of an optical switch (or router, filter or modulator) 570.

In the other path 505 the signal is supplied through an optical circulator 510 to one or more decoder gratings 520 of the kind described in relation to the previous embodiment. The reflected signal is then routed onwards in the signal path by the circulator 510. If multiple decoder gratings 520 are provided, they may be arranged in series as shown or parallel. Each decoder grating is designed to provide a matched filtered response to a particular optical header 502. When correct matched filtering is obtained, (i.e. the incoming header matches one of the decoder gratings), a relatively intense autocorrelation signature is generated by the decoder grating which is then supplied to an optoelectronic converter 540, e.g. a fast-response photodetector, through a non-linear element 530 for pulse shaping.

The non-linear element 530 may be a NOLM as in the previous examples or some other non-linear element, for example a semiconductor optical amplifier (SOA) in accordance with the appended claims.

The optoelectronic converter 540 is connected to an electronic decision circuit 550 which has an electrical output line 560 connected to a control input of the optical switch 570 for triggering it. The electrical control signal thereby gates the switch 570 for sufficient time to allow passage of the original data packet (and generally, but not necessarily, also the header) into the output line 590. The delay line 585 on the input arm 580 of the switch may be actively controlled (e.g. by stretching a fiber spool with a piezoelectric actuator) to ensure that the opening of the switch 570 occurs at the correct time relative to the incoming data signal (i.e. it can be used to accommodate the various time-lags within the system).

This is just one such example of a useful device for packet switched network applications that can be constructed from SSFBG or other coding/decoding components. There are many other such examples that one can envisage. For example an optical routing node where the incoming signal is routed to one of a plurality of output lines depending on the header.

The optical packet switching system may operate with asynchronous transmitters, or a combination of synchronous and asynchronous transmitters and receivers.

## REFERENCES

[1] K. Kitayama, and N. Wada, "Photonic IP routing," *IEEE Photon. Technol. lett.*, vol.11, no.12, pp.1689 1691, 1999.

[2] I. Saeki, S. Nishi, and K. Murakami, "All-optical code division multiplexing switching network based on self-routing principle," in *IEICE Trans. Commun.*, vol.E82-B, no.2, pp.239-245, 1999.

[3] W. C. Y. Lee, "Overview of cellular CDMA," *IEEE Trans. Veh. Technol.*, vol.40, no.2, pp.291-302, 1991

[4] P. C. Teh, P. Petropoulos, M. Ibsen and D. J. Richardson, "The generation, recognition and re-coding of 64-bit, 160 Gbit/s optical code sequences using superstructured fiber Bragg gratings," in *Proc. 5th Optelectronics & Communication Conference,* Japan, 2000, PD1-3.

[5] B. J. Eggleton, P. A. Krug, L. Poladian, and F. Ouellette, "Long period superstructure Bragg gratings in optical fibers," *Electron. Lett.,* vol.30, no.19, pp. 1620-1622, 1994.

[6] M. Ibsen, M. K. Durkin, M. J. Cole, and R. I. Laming, "Sine-sampled fiber Bragg gratings for identical multiple wavelength operation,*" IEEE Photon. Technol. Lett.,* vol.10, no.6, pp.842-844, 1998.

[7] P. Petropoulos, M. Ibsen, M. N. Zervas and D. J. Richardson, "Generation of a 40-Ghz pulse stream by pulse multiplication with a sampled fiber Bragg grating," *Optics Lett.,* vol.25, no.8, pp.521-523, 2000.

[8] P. Petropoulos, M. Ibsen, A. D. Ellis, and D. J. Richardson, "Rectangular pulse generation based on pulse reshaping using a superstructured fiber Bragg grating," to be appeared in *J. Lightwave Technol.,* 2001.

[9] N. Wada, and K. Kitayama, "A 10Gb/s optical code division multiplexing using 8-chip optical bipolar code and coherent detection", *J. Lightwave Technol.*, vol.17, no. 10, pp.1758-1765, 1999.

[10] D. B. Hunter, and R. A. Minasian, "Programmable high-speed optical code recognition using fiber Bragg grating arrays," *Electron. Lett.*, vol.35, no.5, pp.412-414, 1999.

[11] C. -C. Chang, H. P. Sardesai, and A. M. Weiner, "Code-division multiple-access encoding and decoding of femtosecond optical pulses over a 2.5km fiber link," *IEEE Photon. Technol. Lett.*, vol.10, no.1, pp.171-173, 1998.

[12] K. P. Jackson, S. A. Newton, B. Moslehi, M. Tur, C. C. Cutler, J. W. Goodman, and H. J. Shaw, "Optical fiber delay-line signal processing," *IEEE Trans. Microwave Theory Tech.,* vol. MTT-33, no.3, pp.193-209, 1985.

[13] P. C. Teh, P. Petropoulos, M. Ibsen, and D. J. Richardson, "160Gbit/s, 64-bit all-optical code generation and recognition using superstructured fiber Bragg gratings", in *Proc. ECOC'2000 Tech. Dig.,* 2000, vol.1, pp.13-14.

[14] A. L. Steele, "Pulse compression by an optical fiber loop mirror constructed from two different fibers," *Electron. Lett.,* vol.29, no.22, pp.1972-1974, 1993.

[15] I. Y. Krushchev, I.D. Philips, A. D. Ellis, R. J. Manning, D. Nesset, D. G. Moodie. R. V. Penty, and I. H. White, "OTDM applications of dispersion-imbalanced fiber loop mirror," *Electron. Lett.,* vol.35, no.14, pp.1183-1185, 1999.

[16] D. M. Patrick, A. D. Ellis, and D. M. Spirit, "Bit-rate flexible all-optical demultiplexing using a nonlinear optical loop mirror," *Electron. Lett.,* vol.29, no.8, pp.702-703, 1993.

[17] B. -E. Olsson, and P. A. Andrekson, "Noise filtering with the nonlinear optical loop mirror," *J. Ligthwave Technol.,* vol.13, no. 2, pp.213-215, 1995.

[18] G. P. Agrawal, *Nonlinear fiber optics*, Academic Press, 1995, pp.43-55.

[19] L. Chusseau and E. Delevaque, "250-fs optical pulse generation by simultaneous soliton compression and shaping in a nonlinear optical loop mirror including a weak attenuation," *Optics Lett.,* vol.19, no.10, 1994, pp.734-736.

[20] E. H. Dinan, and B. Jabbari, "Spreading codes for direct sequence CDMA and wideband CDMA cellular networks," *IEEE Commun. Mag.*, pp.48-54, September 1998.

[21] N Wada, H Sotobayashi, and K Kitayama, *Electronics Letters,* vol. 35, no. 10, pp. 833-834

**Claims**

1. An optical receiver comprising:

   (a) an input for receiving an encoded optical signal (506) that has been encoded with an encoding signature;
   (b) a decoder (520) connected to receive the encoded optical signal from the input, the decoder incorporating a decoding signature complementary to the encoding signature so as to decode the encoded optical signal to produce a decoded optical signal having an autocorrelation peak and a background component; **characterised in that** the optical receiver further comprises
   (c) a non-linear optical element (530) connected to receive the decoded optical signal and enhance the autocorrelation peak relative to the background component by virtue of the autocorrelation peak having an intensity above a non-linear threshold of the non-linear optical element and the background component having an intensity below the non-linear threshold of the non-linear optical element, thereby to enhance the decoded optical signal, wherein the non-linear optical element is a semiconductor optical amplifier (SOA).

2. A receiver according to claim 1, wherein the decoder comprises a refractive index modulation induced grating.

3. A receiver according to claim 2, wherein the refractive index modulation induced grating is formed in an optical fiber.

4. A receiver according to any one of the preceding claims, further comprising a dispersion compensator arranged to compensate for dispersion during transmission of the encoded optical signal.

5. A receiver according to any one of the preceding claims, further comprising an amplifier arranged prior to the non-linear optical element and configured to supply the decoded optical signal to the non-iinear optical element within a desired power range.

6. A receiver according to any one of the preceding claims, wherein the decoder is arranged in reflection in combination with a circulator (510).

7. A receiver according to any one of claims 1 to 6, wherein the decoder is configured to decode a spread-spectrum encoded optical signal.

8. A receiver according to any one of claims 1 to 6, wherein the decoder is configured to decode an OCDMA encoded optical signal.

9. An optical transmission system comprising:

   (a) an optical transmitter including an encoder for generating encoded optical signals;
   (b) a transmission link for conveying the encoded optical signal from the optical transmitter; and
   (c) an optical receiver according to any one of the preceding claims.

**10.** A method of decoding an encoded optical signal comprising:

(a) receiving an optical signal (506);
(b) decoding the encoded optical signal with a decoder (520) to generate a decoded optical signal having an autocorrelation peak and an adjacent background component; **characterised in that** the method further comprises
(c) supplying the decoded optical signal to a non-linear optical element (530) such that the autocorrelation peak has an intensity above a non-linear threshold of the non-linear optical element and the background component has an intensity below the non-linear threshold, thereby to enhance the autocorrelation peak relative to the background component, wherein the non-linear optical element is a semiconductor optical amplifier (SOA).

**11.** A method according to claim 10, wherein the decoded optical signal is supplied to the non-linear optical element after amplification to ensure that the non-linear optical element performs to a desired specification.

**12.** A method according to claim 10 or 11, wherein the encoded optical signal is a spread-spectrum encoded optical signal.

**13.** A method according to claim 10 or 11, wherein the encoded optical signal is an OCDMA encoded optical signal.

**Patentansprüche**

**1.** Ein optischer Empfänger mit:

(a) einem Eingang zum Empfangen eines codierten optischen Signals (506), welches mit einer Codiersignatur codiert wurde,
(b) einem Decodierer (520), welcher so geschaltet ist, daß er das codierte optische Signal von dem Eingang empfängt, wobei der Decodierer eine Decodiersignatur verwendet, welche komplementär zu der Codiersignatur ist, so daß das codierte optische Signal decodiert wird, um ein decodiertes optisches Signal zu erzeugen, welches eine Autokorrelationsspitze und eine Hintergrundkomponente aufweist, **dadurch gekennzeichnet, daß** der optische Empfänger darüber hinaus aufweist
(c) ein nichtlineares optisches Element (530), welches so geschaltet ist, daß es das decodierte optische Signal empfängt und die Autokorrelationsspitze relativ zu der Hintergrundkomponente verbessert aufgrund dessen, daß die Autokorrelationsspitze eine Intensität über einem nichtlinearen Schwellenwert des nichtlinearen optischen Elementes aufweist und die Hintergrundkomponente eine Intensität unter dem nichtlinearen Schwellenwert des nichtlinearen optischen Elements aufweist, wodurch das decodierte optische Signal verbessert wird, wobei das nichtlineare optische Element ein optischer Halbleiterverstärker (SOA) ist.

**2.** Empfänger gemäß Anspruch 1, **dadurch gekennzeichnet, daß** der Decodierer ein brechungsindexmodulationsinduziertes Gitter aufweist.

**3.** Empfänger gemäß Anspruch 2, **dadurch gekennzeichnet, daß** das brechungsindexmodulationsinduzierte Gitter in einer optischen Faser gebildet ist.

**4.** Empfänger gemäß einem der vorangehenden Ansprüche, darüber hinaus mit einem Dispersionskompensator, der so angeordnet ist, daß er die Dispersion bei der Übertragung des codierten optischen Signals kompensiert.

**5.** Empfänger gemäß einem der vorherigen Ansprüche, darüber hinaus mit einem Verstärker, welcher vor dem nichtlinearen optischen Element angeordnet ist und welcher so eingerichtet ist, daß er das decodierte optische Signal an das nichtlineare optische Element in einem gewünschten Leistungsbereich bereitstellt.

**6.** Empfänger gemäß einem der vorherigen Ansprüche, **dadurch gekennzeichnet, daß** der Decodierer in Reflexion in Verbindung mit einem Zirkulator (510) angeordnet ist.

**7.** Empfänger gemäß einem der Ansprüche 1 bis 6, **dadurch gekennzeichnet, daß** der Decodierer so eingerichtet ist, daß er ein mit verbreitertem Spektrum codiertes optisches Signal decodiert.

**8.** Empfänger gemäß einem der Ansprüche 1 bis 6, **dadurch gekennzeichnet, daß** der Decodierer so eingerichtet ist, daß er ein OCDMA-codiertes optisches Signal decodiert.

9. Optisches Übertragungssystem mit:

(a) einem optischen Übertrager mit einem Codierer zum Erzeugen codierter optischer Signale,
(b) einer Übertragungsverbindung zum Weiterleiten des codierten optischen Signals von dem optischen Übertrager und
(c) einem optischen Empfänger gemäß einem der vorherigen Ansprüche.

10. Verfahren zum Decodieren eines codierten optischen Signals mit:

(a) Empfangen eines optischen Signals (506),
(b) Decodieren des codierten optischen Signals mit einem Decodierer (520), so daß ein decodiertes optisches Signal erzeugt wird, das eine Autokorrelationsspitze und eine angrenzende Hintergrundkomponente aufweist, **dadurch gekennzeichnet, daß** das Verfahren darüber hinaus aufweist
(c) Bereitstellen des decodierten optischen Signals an ein nichtlineares optisches Element (530), so daß die Autokorrelationsspitze eine Intensität über einem nichtlinearen Schwellenwert des nichtlinearen optischen Elements hat und die Hintergrundkomponente eine Intensität unter dem nichtlinearen Schwellenwert hat, wobei die Autokorrelationsspitze relativ zu der Hintergrundkomponente verbessert wird, wobei das nichtlineare optische Element ein optischer Halbleiterverstärker (SOA) ist.

11. Verfahren gemäß Anspruch 10, **dadurch gekennzeichnet, daß** das codierte optische Signal nach einer Verstärkung an das nichtlineare optische Element bereitgestellt wird, so daß sichergestellt wird, daß das nichtlineare optische Element gemäß einer gewünschten Spezifikation arbeitet.

12. Verfahren gemäß Anspruch 10 oder 11, **dadurch gekennzeichnet, daß** das codierte optische Signal ein mit verbreitertem Spektrum codiertes optisches Signal ist.

13. Verfahren gemäß Anspruch 10 oder 11, **dadurch gekennzeichnet, daß** das codierte optische Signal ein OCDMA-codiertes optisches Signal ist.

## Revendications

1. Récepteur optique comprenant :

(a) une entrée pour recevoir un signal optique codé (506) ayant été codé avec une signature de codage ;
(b) un décodeur (520) connecté pour recevoir de l'entrée le signal optique codé, le décodeur comportant une signature de décodage complémentaire de la signature de codage de façon à décoder le signal optique codé pour produire un signal optique décodé ayant un pic d'autocorrélation et une composante d'arrière-plan ; **caractérisé en ce que** le récepteur comprend en outre :
(c) un élément optique non linéaire (530) connecté pour recevoir le signal optique décodé et accentuer le pic d'autocorrélation par rapport à la composante d'arrière-plan en raison du fait que le pic d'autocorrélation présente une intensité supérieure à un seuil non linéaire de l'élément optique non linéaire et que la composante d'arrière-plan a une intensité inférieure au seuil non linéaire de l'élément optique non linéaire, cela ayant pour effet d'amplifier le signal optique décodé, dans lequel l'élément optique non linéaire est un amplificateur optique à semiconducteur (SOA pour Semiconductor Optical Amplifier).

2. Récepteur selon la revendication 1, dans lequel le décodeur comprend un réseau de diffraction induit par modulation de l'indice de réfraction.

3. Récepteur selon la revendication 2, dans lequel le réseau de diffraction induit par modulation de l'indice de réfraction est formé dans une fibre optique.

4. Récepteur selon l'une quelconque des revendications précédentes, comprenant en outre un compensateur de la dispersion conçu pour compenser la dispersion pendant la transmission du signal optique codé.

5. Récepteur selon l'une quelconque des revendications précédentes, comprenant en outre un amplificateur disposé en amont de l'élément optique non linéaire et configuré pour fournir le signal optique décodé à l'élément optique non linéaire dans une gamme de puissance souhaitée.

**6.** Récepteur selon l'une quelconque des revendications précédentes, dans lequel le décodeur est disposé en réflexion en association avec un circulateur (510).

**7.** Récepteur selon l'une quelconque des revendications 1 à 6, dans lequel le décodeur est configuré pour décoder un signal optique codé par étalement spectre.

**8.** Récepteur selon l'une quelconque des revendications 1 à 6, dans lequel le décodeur est configuré pour décoder un signal optique codé par codage AMRCO (Accès Multiple par Répartition de Code Optique).

**9.** Système de transmission optique comprenant :

(a) un émetteur optique comportant un codeur pour générer des signaux optiques codés ;
(b) une liaison de transmission pour acheminer le signal optique codé depuis l'émetteur optique ; et
(c) un récepteur optique selon l'une quelconque des revendications précédentes.

**10.** Procédé de décodage d'un signal optique codé, comprenant :

(a) la réception d'un signal optique (506) ;
(b) le décodage du signal optique codé avec un décodeur (520) pour générer un signal optique décodé ayant un pic d'autocorrélation et une composante d'arrière-plan adjacente,
**caractérisé en ce que** le procédé comprend en outre :
(c) la fourniture du signal optique décodé à un élément optique non linéaire (530) de façon que le pic d'autocorrélation ait une intensité supérieure à un seuil non linéaire de l'élément optique non linéaire et que la composante d'arrière-plan ait une intensité inférieure au seuil non linéaire, afin d'accentuer ainsi le pic d'autocorrélation par rapport à la composante d'arrière-plan, dans lequel l'élément optique non linéaire est un amplificateur optique à semiconducteur (SOA).

**11.** Procédé selon la revendication 10, dans lequel le signal optique décodé est fourni à l'élément optique non linéaire après amplification pour faire en sorte que l'élément optique non linéaire applique une spécification souhaitée.

**12.** Procédé selon la revendication 10 ou 11, dans lequel le signal optique codé est un signal optique codé par étalement de spectre.

**13.** Procédé selon la revendication 10 ou 11, dans lequel le signal optique codé est un signal optique codé par codage AMRCO.

$\sigma(t)$             $h(t) \otimes \sigma(t)$          $h(-t) \otimes h(t) \otimes \sigma(t)$

Circulator                 Circulator

$h(t)$                              $h(-t)$

**Encoder**                       **Decoder**

Fig. 1

Fig. 2

Fig. 3(a)

Fig. 3(b)

19

Fig. 4(a)

Fig. 4(b)

Fig. 4(c)

Fig. 5

Fig. 6(a)

Fig. 6(b)

Optional
Transmission Link

Transmitter

Circulator

C2

Modulator    EDFA 1    Circulator    EDFA 2

EFRL    50:50 coupler    50:50 coupler

1 ~ 10 GHz    C1    SMF 25km
Pattern Generator

64-chip Encoder
Strain tunable    LCFBG

Diagnostics    EDFA 3    Circulator

70:30 Coupler    Circulator

DSF 6.6 km    C1*

64-chip Decoder
Strain tunable

NOLM

Receiver

Fig. 7(a)

Fig. 7(b)

Fig. 8

Fig. 9

(a)
Back-to-back

(b)
Without NOLM

(c)
With NOLM

1.25GHz                    2.5GHz

Fig. 10

Fig. 11

Back-to-back

Without NOLM

With NOLM

Fig. 12(a)

Fig. 12(b)

(a) Back-to-back

(b) Without NOLM

(c) With NOLM

Fig. 13

Fig. 14

Fig. 15

EP 1 264 433 B1